# EUROPEAN PATENT SPECIFICATION

(11) **EP 1 976 158 B1**
(45) Date of publication and mention of the grant of the patent: **01.09.2010**
(21) Application number: 07290367.7
(22) Date of filing: 27.03.2007
(51) Int. Cl.: H04B 10/17

(54) **Method and optical amplifier for amplifying a burst mode optical data signal**
Verfahren und optischer Verstärker zur Verstärkung eines optischen Datensignals im Burstmodus
Procédé et amplificateur optique pour amplifier un signal de données optique en mode rafale

(43) Date of publication of application: 01.10.2008
(73) Proprietor: Alcatel Lucent, 75008 Paris (FR)
(72) Inventor: Mongardien, Dominique Annie, 92160 Antony (FR); Simonneau, Christian, 94800 Villejuif (FR); Zami, Thierry, 91300 Massy (FR)
(74) Representative: Schmidt, Werner Karl

(56) References cited:
- US-A1- 2002 135 867

## Description

### Background of the invention

The present invention relates to a method for optically amplifying a burst mode optical data signal.

Furthermore, the present invention relates to an optical amplifier for amplifying a burst mode optical data signal and to a network element for use in an optical data network, in particular in a Passive Optical Network (PON).

PONs are the preferred solution for installing Fiber To The Home (FTTH) networks. A PON connects an Optical Line Terminal (OLT) to Optical Network Units (ONUs), which are located on the users' side of the network. OLT and ONUs are connected via an optical splitter located in a Remote Node (RN). Downstream traffic from the OLT to the ONUs is transmitted in broadcast fashion in the form of continuous or continuous-like traffic while upstream traffic from the ONUs to the OLT is transmitted in time multiplex, i.e., in burst mode.

In PONs bit rate and reach are limited by the power budget between the OLT and the ONUs. In order to increase these figures Wavelength Division Multiplex (WDM)-PONs have been proposed. In a WDM-PON, pairs of wavelengths (one for downstream traffic, one for upstream traffic) are used to address a given set, i.e., a plurality of users (ONUs), thus defining one of a plurality of PONs, each operating at a respective wavelength (or pair of wavelengths).

In order to further increase the capacity of WDM-PONs as far as number of users, bit rate, and reach are concerned optical amplifiers could be employed. In this case, the optical amplifiers have to cope with burst mode upstream traffic transmitted from the ONUs to the OLT. As mentioned above, downstream traffic in WDM-PONs is generally a continuous or continuous-like traffic.

Optical amplifiers which could be used in WDM-PONs are typically devised as Erbium-doped fiber amplifiers (EDFAs). EDFAs, however, display detrimental transient effects under changing load conditions, as will be frequently encountered with optical signals transmitted in burst mode. A number of approaches have been proposed to overcome said transient effects in optical amplifiers: one consists in the use of electronic means. According to this approach, pump power provided to an active fiber of the optical amplifier is tuned according to an input signal power. While this approach may reduce amplifier gain variations, overshoots and undershoots remain at an output of the amplifier. Moreover, when a long series of "0"s (i.e., no signal) is injected at an input of the amplifier, electronic control does not work properly.

Another approach consists in generating a complementary signal in the temporal domain in order to have stable input to the optical amplifier, e.g., an EDFA, therefore a pump of the EDFA may be kept unchanged. In this way, a "1" is generated when signal data of the optical data signal is "0", and vice-versa, so that the optical amplifier always "sees" constant optical power at its input. The complementary signal can be produced by detecting an input optical data signal before the amplifier and processing this signal in order to generate its optical complementary in order to have a stationary signal when both the original signal and the complement are injected at the input of the amplifier. The wavelength of the complementary signal may be located close to the wavelength of the optical data signal. However, this approach requires additional processing of input signals.

US2002/0135867 A1 discloses a circuitry and a concomitant methodology for generating a burst support signal to augment an input bursty optical signal in an optical channel. The burst support signal is produced whenever the input bursty optical signal falls below a predetermined threshold. The burst support signal is the result of self-oscillation of a semiconductor optical amplifier and a tunable optical feedback loop.

### Object of the invention

It is the object of the present invention to provide a method, an optical amplifier, and a network element of the above-defined types which may be employed to increase the capacity of optical data networks, in particular PONs and WDM-PONs without suffering from the above-mentioned disadvantages.

### Summary of the invention

The object is solved by means of a method having the features of patent claim 1, by means of an optical amplifier having the features of patent claim 5, and by means of a network element having the features of patent claim 8.

Further embodiments of the present invention are mentioned in the subclaims, the wording of which is herewith included by reference in the present description in order to avoid unnecessary repetition of text.

According to a first aspect of the present invention the object is achieved by means of a method for optically amplifying a burst mode optical data signal, comprising the steps of: supplying the burst mode optical data signal to an optical amplifier; and additionally loading said optical amplifier with a continuous wave broadband optical signal.

According to a second aspect of the present invention the object is achieved by means of an optical amplifier for amplifying a burst mode optical data signal, comprising coupling means for applying a continuous wave broadband optical signal.

According to a third aspect of the present invention the object is achieved by means of a network element for use in an optical data network, in particular in a Passive Optical Network, PON, the network element comprising at least one optical amplifier for amplifying a burst mode optical data signal and a continuous wave broadband light source coupled to the optical amplifier for loading the optical amplifier with a continuous wave broadband optical signal.

In accordance with a basic idea underlying the present invention a continuous or continuous wave (CW) broadband light source (BLS) is used in operative connection with an optical amplifier to load the optical amplifier and to allow burst mode operation. At least partially loading the optical amplifier with a continuous wave broadband optical signal ensures that the optical amplifier is always loaded so that input power variation due to burst traffic is reduced, thus overcoming detrimental transient effects. In this way, the optical amplifier may still encounter some bursts or burst-like traffic, an amplitude of which, however, is greatly reduced.

In a preferred embodiment of the present invention, the optical amplifier is devised in the form of an EDFA. In this context, injected CW light effectively and advantageously prevents the input power of the EDFA from being at an excessively low level. Indeed, if the input power of the EDFA were too low (long series of data zeroes, "0") the EDFA may, in some cases, shut down its pump which is detrimental to the operation of the amplifier.

In a preferred embodiment of the present invention, to cope with burst input, an EDFA may be used in a constant gain mode (i.e., the pump power is tuned according to the mean input power variation in order to keep the gain constant). While this may be a well know way to cope with transient input, the present invention provides an improvement of this approach which is specifically adapted for use in Passive Optical Networks (PONs), since the injected continuous broadband light will improve the performances of the constant gain EDFA.

As will be appreciated by a person skilled in the art, known WDM-PONs may already comprise a broadband light source for injection-locking of colorless transmitter units located on the ONU side of the network. In this way, in a highly advantageous and cost-effective embodiment of the present invention it is proposed to use said already existing broadband light source in the OLT of known WDM-PONs for applying continuous broadband optical power to an optical amplifier for amplifying burst mode optical data signals.

Further advantages and characteristics of the present invention can be gathered from the following description of preferred embodiments given by way of example only with reference to the enclosed drawings. Features mentioned above as well as below can be used in accordance with the present invention either individually or in conjunction. The following description is not to be regarded as an exhaustive enumeration but rather as examples with respect to a general concept underlying the present invention.

### Short description of the drawings

- Fig. 1: is a schematic diagram of a first embodiment of the optical amplifier in accordance with the present invention;
- Fig. 2: is a schematic diagram of a second embodiment of the optical amplifier in accordance with the present invention;
- Fig. 3: is a schematic diagram of a first embodiment of the network element in accordance with the present invention;
- Fig. 4: is a schematic diagram of a second embodiment of the network element in accordance with the present invention; and
- Fig. 5: is a schematic diagram of a WDM-PON architecture comprising an embodiment of the network element in accordance with present invention.

### Detailed description

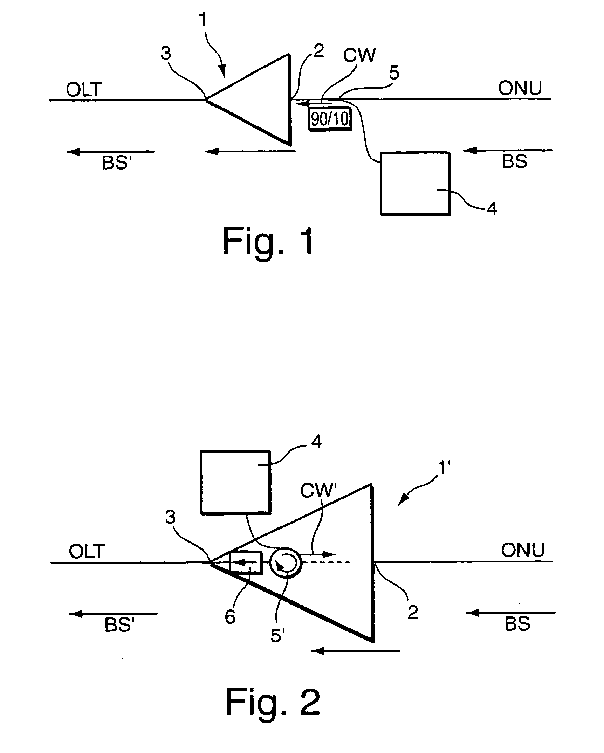

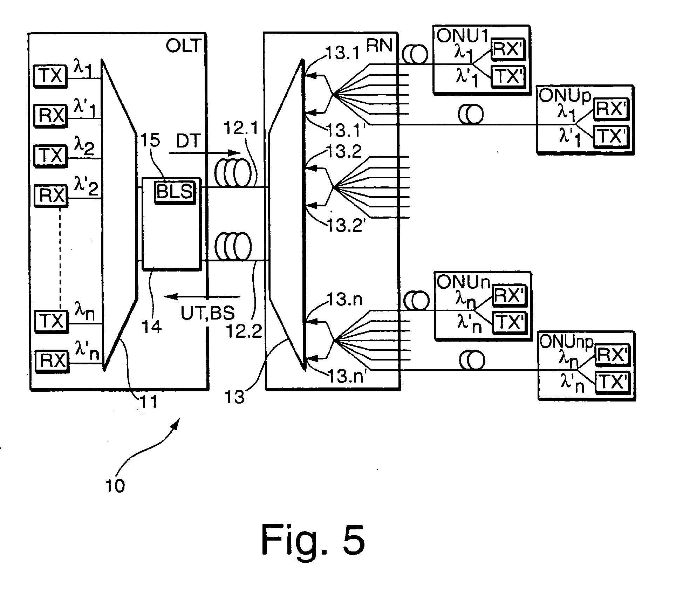

**Fig. 1** shows a schematic diagram of a first embodiment of an optical amplifier 1 in accordance with the present invention. Without limitation, the optical amplifier will hereinafter be described in connection with a Passive Optical Network (PON) or a Wavelength Division Multiplex (WDM)-PON (cf. Fig. 5). Therefore, optical amplifier 1 is connected between an ONU (Optical Network Unit) side of the (WDM)-PON (on the right in Fig. 1) and an OLT (Optical Line Terminal) side of the (WDM)-PON (left in Fig. 1). In the exemplary embodiment shown, optical amplifier 1 is devised in the form of an Erbium-doped fiber amplifier (EDFA) which receives upstream traffic in the form of a burst mode optical data signal **BS** at its input **2** and which outputs an amplified burst mode optical data signal (amplified upstream traffic) **BS'** at its output 3. Input 2 of optical amplifier 1 is operatively connected with a broadband light source (BLS) **4,** which emits a continuous wave broadband optical signal **CW.** BLS 4 is coupled with input 2 of optical amplifier 1 via coupling means **5,** which may be devised in the form of a 90/10 coupler.

During operation of optical amplifier 1 according to Fig. 1, optical power from BLS 4 is used to (partially) load optical amplifier (EDFA) 1 in continuous fashion, thus circumventing negative effects of transients which would otherwise occur during burst mode operation of the EDFA due to discontinuous optical power at input 2. In the embodiment of Fig. 1, the injected continuous wave broadband optical signal CW is co-propagative with signal channels of the (WDM)-PON, i.e., with burst mode optical data signal BS.

**Fig. 2** shows a schematic diagram of a second embodiment of an optical amplifier **1'** in accordance with the present invention. In the embodiment of Fig. 2, a continuous wave broadband optical signal **CW'** is injected in backward or counter-propagative direction with respect to the upstream traffic, i.e., burst mode optical data signal BS. This backward injection prevents the broadband light BLS4 from the degradation of the optical signal-to-noise ratio (OSNR) of the upstream signal due to broadband light CW' from BLS 4. If the optical amplifier 1 comprises an isolator **6** at its output 3, as shown in the embodiment of Fig. 2, the broadband CW' light is injected before this isolator 6. To this end, optical amplifier 1' further comprises coupling means **5'** in the form of a circulator which selectively enable backward injection of continuous wave broadband optical signal CW' and passage of upstream traffic through optical amplifier 1'. Circulator 5' is located before isolator 6 in the upstream direction, so that broadband power is injected before isolator 6.

In comparison with the embodiment of Fig. 1, the embodiment of Fig. 2 requires the use of a modified non-standard optical amplifier 1'. However, it effectively prevents broadband light from degrading the OSNR of amplified upstream signals.

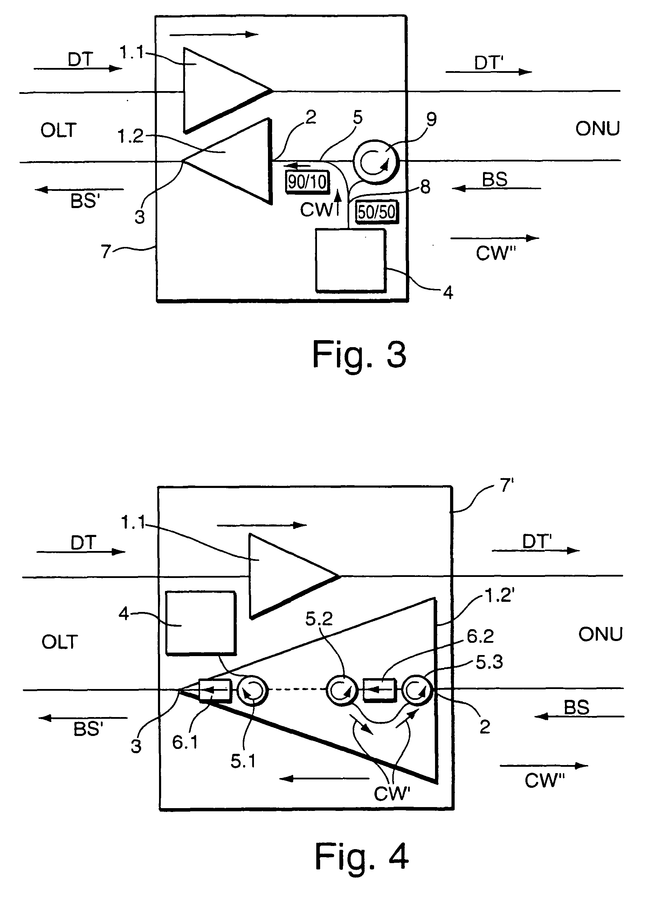

**Fig. 3** shows a schematic diagram of a first embodiment of a network element **7** in accordance with the present invention. Network element 7 comprises two optical amplifiers **1.1, 1.2** wherein optical amplifier 1.1 is a standard optical amplifier arranged for amplifying (continuous) downstream traffic **DT,** thus generating amplified downstream traffic **DT'.** Said downstream traffic DT is directed from the OLT side of the (WDM-)PON to the ONU side of the (WDM-)PON. Optical amplifier 1.2 is adapted for amplifying burst mode optical data signals BS (upstream traffic), thus generating amplified burst mode optical data signal BS', as already described in connection with appended Figs. 1, 2. Furthermore, optical amplifier 1.2 generally corresponds to optical amplifier 1 of Fig. 1 so that a detailed description thereof can be omitted.

Network element 7 further comprises the BLS 4 providing a continuous wave broadband optical signal CW. As in the embodiment of Fig. 1, BLS 4 of Fig. 3 is operatively connected with optical amplifier 1.2 via first coupling means 5, e.g., 90/10 coupling means, for forward injection of the continuous wave broadband optical signal CW into optical amplifier 1.2. However, upstream of said first coupling means 5 BLS 4 is further connected with second coupling means **8,** e.g., in the form of a 50/50 coupler for applying part of the continuous wave broadband optical signal CW to the ONU side of the network. To this end, further coupling means **9** in the form of a circulator are provided downstream of coupling means 8 for selectively propagating part of the continuous wave broadband optical signal CW to the ONU side and the burst mode optical data signal BS to optical amplifier 1.2. In Fig. 3, said backward propagated continuous wave broadband optical signal is denoted by means of arrow **CW"** and is employed for injection locking (i.e., coloring) of colorless transmitter units (not shown in Fig. 3) located on said ONU side of the network.

As will be appreciated by a person skilled in the art, standard WDM-PONs typically comprise BLS 4 for said ONU coloring purpose only. In this way, the embodiment of Fig. 3 re-uses BLS 4 for additionally enabling burst mode operation of optical amplifier 1.2, as previously described with reference to appended Figs. 1, 2. Since downstream traffic DT, DT' in WDM-PONs is continuous, optical amplifier 1.1 can be devised in the form of a standard EDFA.

In this way, the architecture of Fig. 3 effectively provides a bi-directional optical amplifier for WDM-PONs which use injection-locking sources (i.e., transmitter units) on the ONU side.

**Fig. 4** shows a schematic diagram of a second embodiment of a network element 7' in accordance with the present invention. The embodiment of Fig. 4 provides an architecture for bi-directional amplification including burst mode operation with backward (counter-propagative) injection of broadband light. Network element 7' comprises two optical amplifiers 1.1, **1.2',** wherein one optical amplifier 1.1 is arranged for amplifying downstream traffic DT, thus generating amplified downstream traffic DT', as described in detail above with reference to appended Fig. 3. The second optical amplifier 1.2' is arranged for amplifying burst mode upstream traffic BS, thus producing amplified burst mode upstream traffic BS'. The second optical amplifier 1.2' generally corresponds to optical amplifier 1' in Fig. 2, thus comprising output isolator **6.1.** However, optical amplifier 1.2' of Fig. 4 further comprises an input isolator **6.2.** Continuous wave broadband light CW' from BLS 4 is injected into optical amplifier 1.2' before, i.e., upstream of output isolator 6.1 through circulator **5.1,** which corresponds to circulator 5' of Fig. 2. Additional circulators **5.2, 5.3** are arranged downstream and upstream of input isolator 6.2, respectively.

Circulators 5.2, 5.3 serve to bypass input isolator 6.2 of optical amplifier 1.2' for the continuous wave broadband optical signal CW' from BLS 4. As previously described in connection with Fig. 3, on the ONU side of the network broadband light CW", i.e., the continuous wave broadband optical signal from BLS 4, is used to injection-lock or color individual transmitter units. Although not shown in Fig. 4, additional isolators may be present inside optical amplifier 1.2', which would have to be bypassed as well, as previously described with respect to input isolator 6.2.

In comparison with the embodiment of Fig. 3, a particular advantage of the embodiment of Fig. 4 resides in the fact that a lower output power is required for BLS 4, because broadband light is amplified in optical amplifier (EDFA) 1.2' before being injected to color ONU-side transmitter unit. This enables extending network reach without necessarily having to rely on stronger (and therefore more expensive) BLSes.

**Fig. 5** shows a schematic diagram of an example of WDM-PON architecture comprising an embodiment of the network element 7, 7' in accordance with present invention. WDM-PON **10** comprises an Optical Line Terminal **OLT** connected to Optical Network Units (ONUs) **ONU1-ONUnp** located at a user's side of the network via a Remote Node **RN.** Downstream traffic DT is broadcasted from the OLT to the ONUs ONU1-ONUnp. Upstream traffic **UT** from respective sets of users ONU1-ONUp; ...; ONUn-ONUnp is time-multiplexed to the OLT. In a WDM-PON respective wavelength pairs (one for downstream traffic and one for upstream traffic) are used to address each set of users ONU1-ONUp; ...; ONUn-ONUnp, thus effectively defining a plurality of PONs (one for each set of users). The OLT comprises a plurality of transmitter units **TX** operating at respective optical wavelengths **λ₁-λₙ** and a plurality of receiver units **RX** operating at respective optical wavelengths **λ'₁-λ'ₙ.** The OLT further comprises 1:2n-channel multiplexing **means 11** for coupling said plurality of OLT transmitter units TX and receiver units RX to optical fibers **12.1**, **12.2 -** one for downstream traffic DT and one for upstream traffic UT - for connecting the OLT with the RN. The RN comprises 1:2n-channel multiplexing means **13** having pairs of ports **13.1, 13.1'; 13.2, 13.2';** ...; **13.n, 13.n',** each for connecting a respective set of ONUs for broadcast reception of downstream traffic DT and for time-multiplexed transmission of upstream traffic, as previously described. Each ONU (ONU1-ONUnp) comprises a receiver unit **RX'** and a transmitter unit **TX'** operating at respective wavelengths λᵢ, λ'ᵢ, i = 1, ..., n. In the embodiment of Fig. 5, each set of ONUs comprises p different ONUs operating at common reception and transmission wavelengths λᵢ, λ'ᵢ, wherein each set of ONUs is connected with one particular pair of ports 13.1, 13.1'; 13.2, 13.2'; 13.n, 13.n' of multiplexing means 13.

In order to reduce costs of the transmitters TX, TX' used in WDM-PON 10, in particular on the ONU side of the network, i.e., transmitter units TX', use of colorless optical sources has been proposed. In this way, Injection Locked Fabry-Perot (IL-FP) laser diodes or Injection Locked Vertical Cavity Surface Emitting Laser (IL-VCSEL) diodes may be used as transmitter units TX' in the ONUs ONU1-ONUnp. To this end, the OLT further comprises network element **14,** which corresponds either to network element 7 of Fig. 3 or network element 7' of Fig. 4. As previously described, network element 14 comprises a Broadband Light Source (BLS) 15 (cf. reference numeral 4 in Figs. 1-4), a spectrum of which is sliced by multiplexing means 13 of the RN. In other words: Respective slices of power corresponding to different wavelengths or wavelength ranges of the optical spectrum emitted by BLS 15 are provided to different sets of ONUs for locking the laser diodes (transmitter units TX') of the ONUs comprised in that particular set. In this way, the corresponding laser diodes emit a stable and low noise optical power at the required wavelength λ'₁-λ'ₙ which corresponds to the receiving wavelength of the OLT. The injection-locked optical sources in the ONUs are modulated to generate upstream traffic UT in burst mode, thus producing a burst mode optical data signal BS (cf. Figs. 1-4). Since the transmitter units TX' in the ONUs are all identical (i.e., colorless) the emitted wavelength λ'ᵢ which contributes to upstream traffic UT is actually selected by (de-)multiplexing means 13 in the RN.

The transmission of broadband light power in the downstream direction on the same fiber as the downstream traffic DT would degrade downstream OSNR. It is for this reason that two fibers 12.1, 12.2 are used in the embodiment of Fig. 5. However, both fibers 12.1, 12.2 could be arranged within the same cable.

Network element 14 comprises the BLS 15 together with one standard optical amplifier (not shown in Fig. 5) for amplifying downstream traffic DT and one burst mode capable optical amplifier (not shown in Fig. 5) for amplifying burst mode upstream traffic UT, BS, as previously described with reference to Figs. 3 and 4. BLS 15 is used both for coloring the ONU transmitter units TX' and for loading the upstream optical amplifier of network element 14.

As will be appreciated by a person skilled in the art, network element 14 need not necessarily be located in the OLT, but could alternatively be disposed in the RN.

In this way the capacity of WDM-PONs (in terms of the number of users, bit rate, and reach) can be further increased by using optical amplifiers which cope with burst mode upstream traffic without suffering from detrimental transient effects generally connected with burst mode operation of optical amplifiers, e.g., EDFAs.

As will be appreciated by a person skilled in the art, an additional BLS for amplifier loading only may be provided besides BLS 15 if required by network performance. Furthermore, couplers 5, 8 in Fig. 1 and/or Fig. 3 are not limited to the above-mentioned coupling ratios. For instance, coupling ratios may range from 99/1 to 90/10 for coupler 5, and from 30/70 to 70/30 for coupler 8.

## Claims

1. A method for optically amplifying a burst mode optical data signal (BS), comprising the step of:
- supplying the burst mode optical data signal to an optical amplifier (1, 1', 1.2, 1.2');
**characterized in** the step of
- additionally loading said optical amplifier with a continuous wave broadband optical signal (CW, CW').

2. The method of claim 1, comprising operating the optical amplifier (1, 1', 1.2, 1.2') in constant gain mode.

3. The method of claim 1, comprising injecting the continuous wave broadband optical signal (CW, CW') in co-propagating fashion and/or in counterpropagating fashion with the burst mode optical data signal (BS).

4. The method of claim 1, comprising re-using a broadband light source (4, 15) used for coloring transmitter units (TX') for the burst mode optical signal (BS) for providing the continuous wave broadband optical signal (CW, CW').

5. An optical amplifier (1, 1', 1.2, 1.2') adapted to amplify a burst mode optical data signal (BS), **characterized in that** coupling means (5, 5', 5.1) for applying a continuous wave broadband optical signal (CW, CW') are provided.

6. The optical amplifier (1', 1.2') of claim 5, comprising output isolating means (6, 6.1) for preventing signal degradation by the continuous wave broadband optical signal (CW') upstream of the optical amplifier, wherein the coupling means (5', 5.1) are located before the isolating means.

7. The optical amplifier (1.2') of claim 5, comprising bypass means (5.2, 5.3) for guiding the continuous wave broadband optical signal (CW') around input isolating means (6.2) of the optical amplifier.

8. A network element (7, 7') for use in an optical data network (10), in particular in a Passive Optical Network, PON, the network element comprising at least one optical amplifier (1.2, 1.2') adapted to amplify a burst mode optical data signal (BS)
**characterized in that**
a continuous wave broadband light source (15) is provided which is coupled to the optical amplifier for loading the optical amplifier with a continuous wave broadband optical signal (CW, CW').

9. The network element (7, 7') of claim 8, further comprising amplifying means for at least one further optical data signal (DT), preferably a continuous optical data signal propagating in opposite direction with respect to the burst mode optical data signal (BS).

10. The network element of claim 8, wherein light from the continuous wave broadband light source (15) is provided to further elements in the optical data network, in particular to colorless optical sources (TX') for injection-locking purposes.

## Patentansprüche

1. Ein Verfahren zur optischen Verstärkung eines optischen Datensignals im Burst-Modus (BS), umfassend den folgenden Schritt:
- Bereitstellen des optischen Datensignals im Burst-Modus an einen optischen Verstärker (1, 1', 1.2, 1.2');
**gekennzeichnet durch** den Schritt des
- zusätzlichen Einspeisens eines breitbandigen optischen Dauerstrichsignals (CW, CW') in den besagten optischen Verstärker.

2. Das Verfahren nach Anspruch 1, umfassend das Betreiben des optischen Verstärkers (1, 1', 1.2, 1.2') im konstanten Verstärkungsmodus.

3. Das Verfahren nach Anspruch 1, umfassend das Einspeisen des breitbandigen optischen Dauerstrichsignals (CW, CW') in Ausbreitungsrichtung und/oder entgegen der Ausbreitungsrichtung des optischen Datensignals im Burst-Modus (BS).

4. Das Verfahren nach Anspruch 1, umfassend das Wiederverwenden einer Breitband-Lichtquelle (4, 15), welche für das Färben von Übertragungseinheiten (TX') für das optische Signal im Burst-Modus (BS) benutzt wird, um das breitbandige optische Dauerstrichsignal (CW, CW') bereitzustellen.

5. Ein optischer Verstärker (1, 1', 1.2, 1.2'), dazu ausgelegt, ein optisches Datensignal im Burst-Modus (BS) zu verstärken, **dadurch gekennzeichnet, dass** Kopplungsmittel (5, 5', 5.1) zum Anlegen eines breitbandigen optischen Dauerstrichsignals (CW, CW') bereitgestellt werden.

6. Der optische Verstärker (1', 1.2') nach Anspruch 5, umfassend Ausgangsisolierungsmittel (6, 6.1), um eine Verschlechterung des Signals durch das breitbandige optische Dauerstrichsignal (CW') stromaufwärts des optischen Verstärkers zu verhindern, wobei die Kopplungsmittel (5', 5.1) vor den Isolierungsmitteln angeordnet sind.

7. Der optische Verstärker (1.2') nach Anspruch 5, umfassend Bypass-Mittel (5.2, 5.3) zum Leiten des breitbandigen optischen Dauerstrichsignals (CW') um die Eingangsisolierungsmittel (6.2) des optischen Verstärkers herum.

8. Ein Netzwerkelement (7, 7') zur Verwendung in einem optischen Datennetzwerk (10), insbesondere in einem Passiven Optischen Netzwerk, PON, wobei das Netzwerkelement mindestens einen für das Verstärken eines optischen Datensignals im Burst-Modus (BS) geeigneten optischen Verstärker (1.2, 1.2') umfasst,
**dadurch gekennzeichnet, dass**
eine breitbandige Dauerstrich-Lichtquelle (15) bereitgestellt wird, welche an den optischen Verstärker gekoppelt ist, um den optischen Verstärker mit einem breitbandigen optischen Dauerstrichsignal (CW, CW') zu versorgen.

9. Das Netzwerkelement (7, 7') nach Anspruch 8, weiterhin umfassend Verstärkermittel für mindestens ein weiteres optisches Datensignal (DT), vorzugsweise ein kontinuierliches optisches Datensignal, welches sich im Verhältnis zum optischen Datensignal im Burst-Modus (BS) in der entgegengesetzten Richtung ausbreitet.

10. Das Netzwerkelement nach Anspruch 8, wobei das Licht von der breitbandigen Dauerstrich-Lichtquelle (15) an weitere Elemente in dem optischen Datennetzwerk bereitgestellt wird, insbesondere an farblose optische Quellen (TX') für Injektionskopplungszwecke.

## Revendications

1. Procédé d'amplification optique d'un signal de données optique en mode rafale (BS), comprenant les étapes suivantes :
- acheminement du signal de données optique en mode rafale à un amplificateur optique (1, 1', 1.2, 1.2') ;
**caractérisé par** l'étape de
- chargement en outre dudit amplificateur optique avec un signal optique à large bande à onde continue (CW, CW').

2. Procédé selon la revendication 1, comprenant l'utilisation de l'amplificateur optique (1, 1', 1.2, 1.2') en mode gain constant.

3. Procédé selon la revendication 1, comprenant l'injection du signal optique à large bande à onde continue (CW, CW') en propagation conjointe et/ou en contre-propagation avec le signal de données optique en mode rafale (BS).

4. Procédé selon la revendication 1, comprenant la réutilisation d'une source de lumière à large bande (4, 15) utilisée pour colorer les unités d'émission (TX') du signal optique en mode rafale (BS) pour délivrer le signal optique à large bande à onde continue (CW, CW').

5. Amplificateur optique (1, 1', 1.2, 1.2') adapté pour amplifier un signal de données optique en mode rafale (BS), **caractérisé en ce qu'**il existe des moyens de couplage (5, 5', 5.1) pour appliquer un signal optique à large bande à onde continue (CW, CW').

6. Amplificateur optique (1', 1.2') selon la revendication 5, comprenant des moyens d'isolation de la sortie (6, 6.1) pour empêcher la dégradation du signal par le signal optique à large bande à onde continue (CW') en amont de l'amplificateur optique, les moyens de couplage (5', 5.1) se trouvant avant les moyens d'isolation.

7. Amplificateur optique (1.2') selon la revendication 5, comprenant des moyens de contournement (5.2, 5.3) pour guider le signal optique à large bande à onde continue (CW') autour des moyens d'isolation de la sortie (6.2) de l'amplificateur optique.

8. Élément de réseau (7, 7') destiné à être utilisé dans un réseau de données optique (10), notamment dans un réseau optique passif, PON, l'élément de réseau comprenant au moins un amplificateur optique (1.2, 1.2') adapté pour amplifier un signal de données optique en mode rafale (BS)
**caractérisé en ce que**
il existe une source de lumière à large bande à onde continue (15) qui est couplée à l'amplificateur optique pour charger l'amplificateur optique avec un signal optique à large bande à onde continue (CW, CW').

9. Élément de réseau (7, 7') selon la revendication 8, comprenant en outre des moyens d'amplification pour au moins un signal de données optique supplémentaire (DT), de préférence un signal de données optique continu qui se propage en sens inverse du signal de données optique en mode rafale (BS).

10. Élément de réseau selon la revendication 8, la lumière provenant de la source de lumière à large bande à onde continue (15) étant délivrée à d'autres éléments dans le réseau optique, notamment à des sources optiques incolores (TX') à des fins de verrouillage de l'injection.
